# EUROPÄISCHE PATENTSCHRIFT

(11) **EP 4 022 194 B1**
(45) Veröffentlichungstag und Bekanntmachung des Hinweises auf die Patenterteilung: **04.10.2023**
(21) Anmeldenummer: 20754288.7
(22) Anmeldetag: 18.08.2020
(51) Int. Cl.: F16D 41/12, F16D 41/18

(54) **FORMSCHLÜSSIGE FREILAUFKUPPLUNG**
POSITIVE LOCK OVERRUNNING CLUTCH
ACCOUPLEMENT À ROUE LIBRE PAR COMPLÉMENTARITÉ DE FORME

(30) Priorität: 27.08.2019 EP 19193854
(43) Veröffentlichungstag der Anmeldung: 06.07.2022
(73) Patentinhaber: Hilti Aktiengesellschaft, 9494 Schaan (LI)
(72) Erfinder: KNYRIM, Maximilian, 89584 Ehingen (DE)
(74) Vertreter: Hilti Aktiengesellschaft Corporate Intellectual Property
(86) Internationale Anmeldenummer: PCT/EP2020/073070
(87) Internationale Veröffentlichungsnummer: WO 2021/037605

(56) Entgegenhaltungen:
- WO-A1-2013/014515
- JP-A- S5 891 932
- US-A- 3 589 486
- US-A- 3 928 862

## Beschreibung

### Formschlüssige Freilaufkupplung

Die vorliegende Erfindung betrifft eine formschlüssige Freilaufkupplung mit einem eine Rastkontur aufweisenden Außenring und einem konzentrisch zum Außenring angeordneten Innenring. Der Innenring weist wenigstens eine Klinke auf, die zum Eingriff in die Rastkontur vorgesehen ist.

Eine solche Freilaufkupplung ist beispielweise aus der DE10 2008 064 153 A1 bekannt.

Weitere bekannte Freilaufkupplungen sind aus der US 3,589,486 A und der US 3,928,862 A bekannt.

Es ist Aufgabe der vorliegenden Erfindung eine Freilaufkupplung bereitzustellen, mittels der ein übertragbares Drehmoment vergrößert ist.

Die Aufgabe wird durch eine Freilaufkupplung gemäß Anspruch 1 gelöst, so dass der Innenring ein Verstärkungsprofil zur Erhöhung eines übertragbaren Drehmoments aufweist, wobei das Verstärkungsprofil, wenn die Freilaufkupplung am Außenring in Sperrrichtung betätigt wird, gegen ein an der Klinke ausgebildetes Gegenprofil abgestützt ist. Die Sperrrichtung ist vorzugsweise auf eine Betätigung am Außenring bezogen. Es hat sich als vorteilhaft herausgestellt, wenn das Verstärkungsprofil und/oder das Gegenprofil auf einer der Rastkontur abgewandten Seite der Klinke angeordnet ist. Das Verstärkungsprofil und/oder das Gegenprofil können einstückig mit dem Innenring ausgebildet sein.

Die Erfindung schließt die Erkenntnis ein, dass formschlüssige Freilaufkupplungen - etwa im Gegensatz zu kraftschlüssigen Freilaufkupplungen - mit einer vergleichsweise geringen Teilezahl darstellbar sind, was eine einfache und kostengünstige Montage begünstigt. Auf Grund des vermeidbaren "Durchrutschens" formschlüssiger Freilaufkupplungen eignen sich diese in besonderer Weise zum Übertragen vergleichsweise hoher Drehmomente, die beispielsweise in Bohrhämmern auftreten. Erfindungsgemäß ist die Klinke einstückig (monolithisch) mit dem Innenring ausgebildet, wodurch sich ein weiterer Vorteil hinsichtlich einer einfachen und kostengünstigen Montage ergibt.

In einer besonders bevorzugten Ausgestaltung weist der Innenring eine Nebenklinke auf, die, bezogen auf eine Rotationsachse der Freilaufkupplung, in axialer Richtung zu der Klinke versetzt am Innenring angeordnet. Es hat sich als vorteilhaft herausgestellt, wenn die Nebenklinke einstückig mit Innenring ausgebildet ist. In einer weiteren bevorzugten Ausgestaltung sind die Klinke und die Nebenklinke durch einen umlaufenden Axialspalt voneinander beabstandet. Die Klinke und die Nebenklinke können in axialer Richtung fluchten. Es hat sich als besonders vorteilhaft herausgestellt, wenn die Klinke und/oder die Nebenklinke jeweils als Drucksperrklinke ausgebildet ist.

In einer weiteren bevorzugten Ausgestaltung weist der der Innenring eine Mehrzahl von Klinken aufweist, die entlang eines äußeren Umfangs des Innenrings angeordnet sind. Der Innenring eine Mehrzahl von Nebenklinken aufweisen, die entlang eines äußeren Umfangs des Innenrings angeordnet sind. Besonders bevorzugt ist es, wenn die Klinke und die Nebenklinke in axialer Richtung fluchten.

Es hat sich als vorteilhaft herausgestellt, wenn der Außenring und/oder der Innenring als Spritzgussteil bereitgestellt ist. Der Außenring und/oder der Innenring können aus Kunststoff besteht oder einen solchen aufweisen. Besonders bevorzugt ist der Außenring und/oder der Innenring metallfrei ausgebildet. Eine Klinke und/oder eine Nebenklinke kann mehrere Eingriffsflanken zum Eingriff in eine Rastkontur aufweisen.

In einer besonders bevorzugten Ausgestaltung weist die Freilaufkupplung einen konzentrisch zum Innenring angeordneten Nebenaußenring auf. Vorzugsweise ist der Nebenaußenring als vom Außenring verschiedenes Teil ausgebildet. Somit kann vorteilhafterweise mittels des Nebenaußenring eine vom Außenring unabhängige Freilauffunktion realisiert werden. Der Außenring und der Nebenaußenring können auf ein und demselben Innenring angeordnet sein. Die Ausgestaltung der Freilaufkupplung mit einen konzentrisch zum Innenring angeordneten Nebenaußenring kann sowohl für eine einstückig mit dem Innenring ausgebildete Klinke und/oder Nebenklinke als auch für eine nicht einstückig mit dem Innenring ausgebildete Nebenklinke zum Tragen kommen.

Es hat sich als vorteilhaft herausgestellt, wenn der Außenring eine Schwenkhülse zum Koppeln des Außenrings an ein Schlagwerk und/oder einen Drehantrieb eines Bohrhammers aufweist. Es wird ebenfalls ein Bohrhammer bereitgestellt, der eine Freilaufkupplung der vorbeschriebenen Art aufweist. Vorzugsweise ist die Werkzeugaufnahme des Bohrhammers mit dem Schlagwerk und/oder dem Drehantrieb zwecks Bewegungsübertragung gekoppelt. Die Werkzeugaufnahme kann zur Aufnahme eines schlagenden und drehenden Werkzeugs ausgebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes Beispiel einer Freilaufkupplung;
- Fig. 2: ein zweites Beispiel einer Freilaufkupplung;
- Fig. 3: ein erstes bevorzugtes Ausführungsbeispiel einer Freilaufkupplung; und
- Fig. 4: ein zweites bevorzugtes Ausführungsbeispiel einer Freilaufkupplung.

### Ausführungsbeispiele:

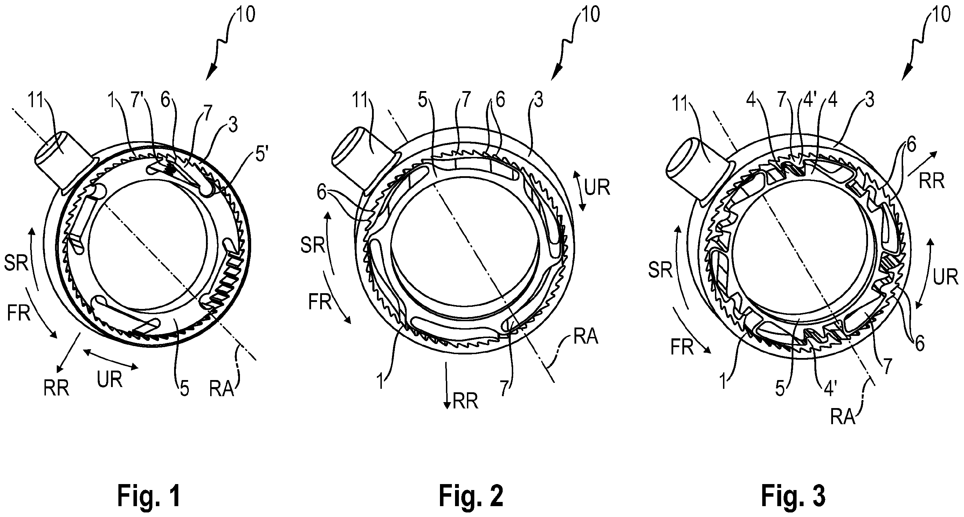

Ein erstes Beispiel einer nicht erfindungsgemäßen formschlüssigen Freilaufkupplung 10 ist Fig. 1 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden. Die Klinke 7 ist als diskretes Teil ausgebildet, d.h. insbesondere nicht einstückig mit dem Innenring 5 ausgebildet.

Die diskret ausgebildete Klinke 7 ist in eine im Innenring 5 vorgesehene Klinkennut 5' eigebracht (beispielsweise durch Einschieben parallel zur Rotationsachse RA) und somit mit dem Innenring 5 beweglich verbunden. Die Klinke 7 ist als Drucksperrklinke ausgebildet. Eine Druckfeder 7' spannt die Klinke 7 in radialer RR in Richtung der Rastkontur 1 vor.

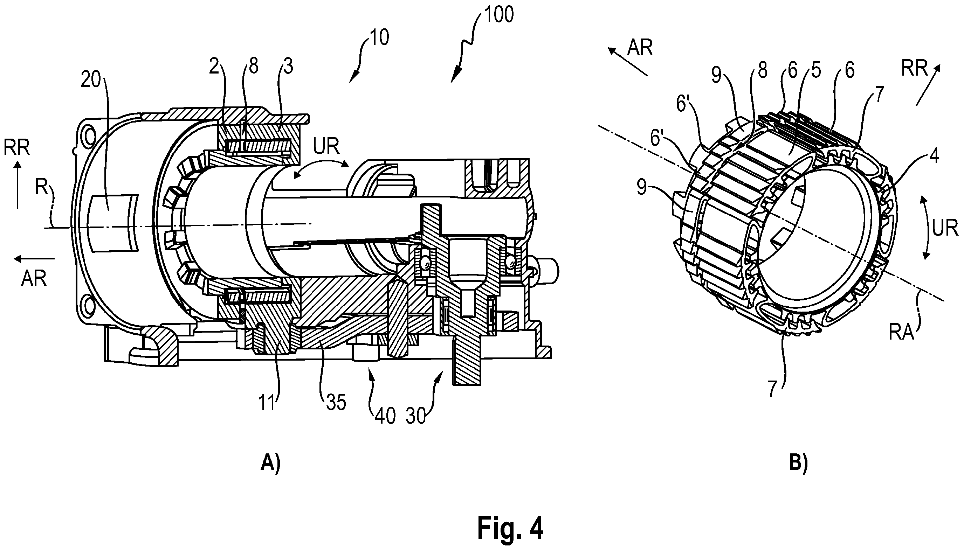

Der Außenring 3 weist eine Schwenkhülse 11 auf über die der Außenring 3 beispielsweise an ein Schlagwerk 30 und/oder einen Drehantrieb 40 eines Bohrhammers 100 (vgl. Fig. 4) angekoppelt werden kann.

Wird die Freilaufkupplung 10 am Außenring 3, beispielsweise mittels der Schwenkhülse 11, in Sperrrichtung SR betätigt, so ist eine Drehmomentübertragung auf den Innenring 5 möglich ist. Dabei wird die eine Spitze 6 der Klinke 7 im Sinne einer Drucksperrklinke gegen die Rastkontur 1 gedrückt. Wird die Freilaufkupplung 10 am Außenring 3, beispielsweise mittels der Schwenkhülse 11, in Freilaufrichtung FR betätigt, so kann der Außenring 3 durchdrehen. Es wird, abgesehen von einem vernachlässigbaren Ablösemoment der Klinke 7, kein Drehmoment auf den Innenring 5 übertragen.

Wie der Fig. 1 entnommen werden kann sind in Umfangsrichtung UR vier Klinkennut 5' vorgesehen, so dass im Innenring 5 insgesamt vier Klinken 7 aufgenommen werden können, die dann eines äußeren Umfangs des Innenrings 5 angeordnet sind. Im Ausführungsbeispiel der Fig. 1 sind der Außenring 3 und die Klinken 7 beispielhaft aus Metall hergestellt. Der Innenring 5 ist als vergleichsweise kostengünstiges Spritzgussteil und besteht aus Kunststoff.

Ein zweites Beispiel einer nicht erfindungsgemäßen formschlüssigen Freilaufkupplung 10 ist Fig. 2 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden.

Wie der Fig. 2 entnommen werden kann, ist die Klinke 7 einstückig mit dem Innenring 5 ausgebildet. Genauer gesagt weist der Innenring 5 sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht. Der Außenring 3 nebst Schwenkhülse 11 ist beispielhaft aus Metall gefertigt. Das Freilaufgetriebe 10 der Fig. 2 besteht beispielhaft aus genau zwei Teilen, nämlich aus dem einstückigen Innenring 5 und dem einstückigen Außenring 3.

Ein erstes Ausführungsbeispiel einer erfindungsgemäßen formschlüssigen Freilaufkupplung 10 ist Fig. 3 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden.

Wie der Fig. 3 entnommen werden kann, ist die Klinke 7 einstückig mit dem Innenring 5 ausgebildet. Genauer gesagt weist der Innenring 5 sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht. Der Außenring 3 nebst Schwenkhülse 11 ist beispielhaft aus Metall gefertigt.

Zur Erhöhung eines in Sperrrichtung SR übertragbaren Drehmoments weist der Innenring 5 ein Verstärkungsprofil 4 auf. Das Verstärkungsprofil 4 ist, wenn die Freilaufkupplung 10 in Sperrrichtung SR betätigt wird, gegen ein an der Klinke 7 ausgebildetes Gegenprofil 4' abgestützt ist. Sowohl das Verstärkungsprofil 4 als auch das Gegenprofil 4' sind auf einer der Rastkontur 1 abgewandten Seite der Klinke 7 angeordnet. Im vorliegend dargestellten Ausführungsbeispiel sind pro Klinke 7 zwei Gegenprofil 4' an der Klinke 7 selbst, sowie zwei einstückig mit dem Innenring 5 ausgebildete Verstärkungsprofile 4 vorgesehen. Das Freilaufgetriebe 10 der Fig. 3 besteht beispielhaft aus genau zwei Teilen, nämlich aus dem einstückigen Innenring 5 und dem einstückigen Außenring 3.

Ein zweites Ausführungsbeispiel einer erfindungsgemäßen formschlüssigen Freilaufkupplung 10 ist Fig. 4 dargestellt. Dabei zeigt Fig. 4A beispielhaft die Freilaufkupplung 10 eingebaut in einem hier nur teilweise dargestellten Bohrhammer 100. Fig. 4B zeigt den freigestellten Innenring 5.

Wie beim Ausführungsbeispiel der Fig. 3 weist der Innenring 5 der Fig. 4B sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht.

Zusätzlich zu der in Fig. 3 gezeigten Freilaufkupplung 10, weist der Innenring 5 der Freilaufkupplung der Fig. 4A wenigstens eine Nebenklinke 9 auf (im dargestellten Ausführungsbeispiel sind es sechs Nebenklinken 9), die, bezogen auf eine Rotationsachse RA der Freilaufkupplung 10, in axialer Richtung AR zu der Klinke 7 versetzt am Innenring 5 angeordnet. Die Nebenklinken 9 sind ebenfalls einstückig mit Innenring 7 ausgebildet. Die Klinke 7 und die Nebenklinke 9 fluchten in axialer Richtung AR. Das Freilaufgetriebe 10 der Fig. 4 besteht beispielhaft aus genau drei Teilen, nämlich aus dem einstückigen Innenring 5, dem einstückigen Außenring 3 und dem einstückigen Nebenaußenring 2.

Wie der Fig. 4A entnommen werden kann sind die Klinken 7 und die Nebenklinken 9 durch einen den Innenring 3 in Umfangsrichtung UR umlaufenden Axialspalt 8 voneinander beabstandet. Sowohl die Klinken 7 als auch die Nebenklinken 9 sind jeweils als Drucksperrklinken ausgebildet ist. Sowohl die Klinken 7 als auch die Nebenklinken 9 weist mehrere Eingriffsflanken 6, 6' auf, was eine höhere Drehmomentübertragung auf den hier beispielhaft als Kunststoff-Spritzgussteil bereitgestellten Innenring 5 ermöglicht.

Dabei zeigt Fig. 4A zeigt wie bereits erwähnt die Freilaufkupplung 10 eingebaut in einem teilweise dargestellten Bohrhammer 100. Der Bohrhammer 100 ist ausgestattet mit einer Werkzeugaufnahme 20, einem Schlagwerk 30 und einem Drehantrieb 40, die hier nicht genauer erläutert werden müssen. Die Freilaufkupplung 10 in Fig. 4A weist einen konzentrisch zum Innenring 5 angeordneten Nebenaußenring 2 auf. Der Nebenaußenring 2 ist als vom Außenring 3 verschiedenes Teil ausgebildet, so dass mittels des Nebenaußenring 2 eine vom Außenring 3 unabhängige Freilauffunktion realisiert wird. Der Außenring 3 und der Nebenaußenring 2 sind auf ein und demselben Innenring 5 angeordnet.

Der Außenring 3 weist eine Schwenkhülse 11 auf mit dem der Außenring 3 über einen Pleuel 35 an ein Schlagwerk 30 des Bohrhammers 100 zwecks Bewegungsübertragung gekoppelt ist.

### Bezugszeichenliste

- 1: Rastkontur
- 2: Nebenaußenring
- 3: Außenring
- 4: Verstärkungsprofil
- 4`: Gegenprofil
- 5: Innenring
- 5': Klinkennut
- 6, 6': Eingriffsflanke
- 7: Klinke
- 7': Druckfeder
- 8: Axialspalt
- 9: Nebenklinke
- 10: Freilaufkupplung
- 11: Schwenkhülse

- 20: Werkzeugaufnahme
- 30: Schlagwerk
- 35: Pleuel
- 40: Drehantrieb
- 100: Bohrhammer

- AR: axiale Richtung
- FR: Freilaufrichtung
- RA: Rotationsachse
- RR: radiale Richtung
- SR: Sperrrichtung
- UR: Umfangsrichtung

## Patentansprüche

1. Formschlüssige Freilaufkupplung (10) mit einem eine Rastkontur (1) aufweisenden Außenring (3) und einem konzentrisch zum Außenring (3) angeordneten Innenring (5), wobei der Innenring (5) eine Klinke (7) aufweist, die zum Eingriff in die Rastkontur (1) vorgesehen ist, wobei die Klinke (7) beweglich mit dem Innenring (5) verbunden und einstückig mit dem Innenring (5) ausgebildet ist,
**dadurch gekennzeichnet, dass** der Innenring (5) ein Verstärkungsprofil (4) zur Erhöhung eines übertragbaren Drehmoments aufweist, wobei das Verstärkungsprofil (4), wenn die Freilaufkupplung (10) am Außenring (3) in Sperrrichtung (SR) betätigt wird, gegen ein an der Klinke ausgebildetes Gegenprofil (4') abgestützt ist.

2. Freilaufkupplung (10) nach Anspruch 1,
**dadurch gekennzeichnet, dass** der Innenring (5) eine Nebenklinke (9) aufweist, die, bezogen auf eine Rotationsachse (RA) der Freilaufkupplung (10), in axialer Richtung (AR) zu der Klinke (7) versetzt am Innenring (5) angeordnet und vorzugsweise einstückig mit Innenring (7) ausgebildet ist.

3. Freilaufkupplung (10) nach Anspruch 2,
**dadurch gekennzeichnet, dass** die Klinke (7) und die Nebenklinke (9) durch einen umlaufenden Axialspalt (8) voneinander beabstandet sind.

4. Freilaufkupplung (10) nach Anspruch 2 oder 3,
**dadurch gekennzeichnet, dass** die Klinke (7) und die Nebenklinke (9) jeweils als Drucksperrklinke ausgebildet ist.

5. Freilaufkupplung (10) nach einem der Ansprüche 2 bis 4,
**dadurch gekennzeichnet, dass** die Klinke (7) und die Nebenklinke (9) in axialer Richtung (AR) fluchten.

6. Freilaufkupplung (10) nach einem der vorangehenden Ansprüche,
**dadurch gekennzeichnet, dass** der Innenring (5) eine Mehrzahl von Klinken (7) aufweist, die entlang eines äußeren Umfangs (UR) des Innenrings (5) angeordnet sind.

7. Freilaufkupplung (10) nach einem der vorangehenden Ansprüche,
**dadurch gekennzeichnet, dass** der Außenring (3) und/oder der Innenring (5) als Spritzgussteil bereitgestellt ist und insbesondere aus Kunststoff besteht oder metallfrei ausgebildet ist.

8. Freilaufkupplung (10) nach einem der vorhergehenden Ansprüche,
**dadurch gekennzeichnet, dass** das Verstärkungsprofil (4) und/oder das Gegenprofil (4') auf einer der Rastkontur (1) abgewandten Seite der Klinke (7) angeordnet ist.

9. Freilaufkupplung (10) nach einem der vorangehenden Ansprüche,
**dadurch gekennzeichnet, dass** die Freilaufkupplung (10) einen konzentrisch zum Innenring (5) angeordneten Nebenaußenring (2) aufweist, wobei der Nebenaußenring (2) als vom Außenring (3) verschiedenes Teil ausgebildet, so dass mittels des Nebenaußenring (2) eine vom Außenring (3) unabhängige Freilauffunktion realisiert wird.

10. Freilaufkupplung (10) nach einem der Ansprüche 2 bis 9,
**dadurch gekennzeichnet, dass** die Klinke (7) und/oder die Nebenklinke (9) mehrere Eingriffsflanken aufweist.

11. Freilaufkupplung (10) nach einem der vorangehenden Ansprüche,
**dadurch gekennzeichnet, dass** der Außenring (3) eine Schwenkhülse (11) zum Koppeln des Außenrings (3) an ein Schlagwerk (30) und/oder einen Drehantrieb (40) eines Bohrhammers (100) aufweist.

12. Bohrhammer (100) mit einer Werkzeugaufnahme (20), einem Schlagwerk (30) und einem Drehantrieb (40), wobei der Bohrhammer (100) eine Freilaufkupplung (10) nach einem der vorangehenden Ansprüche aufweist, über die die Werkzeugaufnahme (20) mit dem Schlagwerk (30) und/oder dem Drehantrieb (40) zwecks Bewegungsübertragung gekoppelt ist.

## Claims

1. Form-fitting overrunning clutch (10) with an outer ring (3) which has a latching contour (1) and with an inner ring (5) which is arranged concentrically with respect to the outer ring (3), the inner ring (5) having a pawl (7) which is provided for engagement into the latching contour (1), the pawl (7) being connected movably to the inner ring (5) and being configured in one piece with the inner ring (5), **characterized in that** the inner ring (5) has a reinforcing profile (4) for increasing a torque which can be transmitted, the reinforcing profile (4) being supported against a counter-profile (4') configured on the pawl when the overrunning clutch (10) is actuated on the outer ring (3) in the locking direction (SR).

2. Overrunning clutch (10) according to Claim 1, **characterized in that** the inner ring (5) has an auxiliary pawl (9) which is arranged on the inner ring (5) offset in the axial direction (AR) with respect to the pawl (7), in relation to a rotational axis (RA) of the overrunning clutch (10), and is preferably configured in one piece with the inner ring (7).

3. Overrunning clutch (10) according to Claim 2, **characterized in that** the pawl (7) and the auxiliary pawl (9) are spaced apart from one another by way of a circumferential axial gap (8).

4. Overrunning clutch (10) according to Claim 2 or 3, **characterized in that** the pawl (7) and the auxiliary pawl (9) are configured in each case as a pressure pawl.

5. Overrunning clutch (10) according to one of Claims 2 to 4, **characterized in that** the pawl (7) and the auxiliary pawl (9) are aligned in the axial direction (AR) .

6. Overrunning clutch (10) according to one of the preceding claims, **characterized in that** the inner ring (5) has a plurality of pawls (7) which are arranged along an outer circumference (UR) of the inner ring (5).

7. Overrunning clutch (10) according to one of the preceding claims, **characterized in that** the outer ring (3) and/or the inner ring (5) are/is provided as an injection moulded part and consist/consists of plastic, in particular, or are/is of metal-free configuration.

8. Overrunning clutch (10) according to one of the preceding claims, **characterized in that** the reinforcing profile (4) and/or the counter-profile (4') are/is arranged on a side of the pawl (7) which faces away from the latching contour (1).

9. Overrunning clutch (10) according to one of the preceding claims, **characterized in that** the overrunning clutch (10) has an auxiliary outer ring (2) which is arranged concentrically with respect to the inner ring (5), the auxiliary outer ring (2) being configured as a part which is different from the outer ring (3), with the result that a freewheeling function which is independent of the outer ring (3) is realised by means of the auxiliary outer ring (2).

10. Overrunning clutch (10) according to one of Claims 2 to 9, **characterized in that** the pawl (7) and/or the auxiliary pawl (9) have/has a plurality of engagement flanks.

11. Overrunning clutch (10) according to one of the preceding claims, **characterized in that** the outer ring (3) has a swivel sleeve (11) for coupling the outer ring (3) to a percussion mechanism (30) and/or a rotary drive (40) of a hammer drill (100).

12. Hammer drill (100) with a tool holder (20), a percussion mechanism (30) and a rotary drive (40), the hammer drill (100) having an overrunning clutch (10) according to one of the preceding claims, via which the tool holder (20) is coupled to the percussion mechanism (30) and/or the rotary drive (40) for the purpose of the transmission of movement.

## Revendications

1. Accouplement (10) à roue libre par complémentarité de forme, comprenant une bague extérieure (3) présentant un contour à crans (1) et une bague intérieure (5) disposée concentriquement à la bague extérieure (3), la bague intérieure (5) présentant un cliquet (7) qui est prévu pour venir en engagement dans le contour à crans (1), le cliquet (7) étant relié de manière mobile à la bague intérieure (5) et étant réalisé d'une seule pièce avec la bague intérieure (5),
**caractérisé en ce que** la bague intérieure (5) présente un profil de renforcement (4) pour augmenter un couple transmissible, le profil de renforcement (4) prenant appui contre un contre-profil (4') formé sur le cliquet, lorsque l'accouplement (10) à roue libre est actionné sur la bague extérieure (3) dans le sens de blocage (SR).

2. Accouplement (10) à roue libre selon la revendication 1,
**caractérisé en ce que** la bague intérieure (5) présente un cliquet secondaire (9) qui, par rapport à un axe de rotation (RA) de l'accouplement (10) à roue libre, est disposé sur la bague intérieure (5) de manière décalée dans la direction axiale (AR) par rapport au cliquet (7) et est de préférence réalisé d'une seule pièce avec la bague intérieure (7).

3. Accouplement (10) à roue libre selon la revendication 2,
**caractérisé en ce que** le cliquet (7) et le cliquet secondaire (9) sont espacés l'un de l'autre par une fente axiale périphérique (8).

4. Accouplement (10) à roue libre selon la revendication 2 ou 3,
**caractérisé en ce que** le cliquet (7) et le cliquet secondaire (9) sont chacun conçus sous la forme de cliquets de verrouillage à pression.

5. Accouplement (10) à roue libre selon l'une des revendications 2 à 4,
**caractérisé en ce que** le cliquet (7) et le cliquet secondaire (9) sont alignés dans la direction axiale (AR).

6. Accouplement (10) à roue libre selon l'une des revendications précédentes,
**caractérisé en ce que** la bague intérieure (5) comprend une pluralité de cliquets (7) disposés le long d'une circonférence extérieure (UR) de la bague intérieure (5).

7. Accouplement (10) à roue libre selon l'une des revendications précédentes,
**caractérisé en ce que** la bague extérieure (3) et/ou la bague intérieure (5) est réalisée sous forme de pièce moulée par injection et est notamment constituée de matière plastique ou est exempte de métal.

8. Accouplement (10) à roue libre selon l'une des revendications précédentes,
**caractérisé en ce que** le profil de renforcement (4) et/ou le contre-profil (4') est disposé sur un côté du cliquet (7) opposé au contour à crans (1).

9. Accouplement (10) à roue libre selon l'une des revendications précédentes,
**caractérisé en ce que** l'accouplement (10) à roue libre présente une bague extérieure secondaire (2) disposée concentriquement à la bague intérieure (5), la bague extérieure secondaire (2) étant conçue sous la forme d'une pièce différente de la bague extérieure (3), de sorte qu'une fonction de roue libre indépendante de la bague extérieure (3) est réalisée au moyen de la bague extérieure secondaire (2).

10. Accouplement (10) à roue libre selon l'une des revendications 2 à 9,
**caractérisé en ce que** le cliquet (7) et/ou le cliquet secondaire (9) présente(nt) plusieurs flancs d'engagement.

11. Accouplement (10) à roue libre selon l'une des revendications précédentes,
**caractérisé en ce que** la bague extérieure (3) présente une douille pivotante (11) pour relier la bague extérieure (3) à un mécanisme de percussion (30) et/ou à un entraînement rotatif (40) d'un marteau perforateur (100).

12. Marteau perforateur (100) avec un porte-outil (20), un mécanisme de percussion (30) et un entraînement rotatif (40), le marteau perforateur (100) présentant un accouplement (10) à roue libre selon l'une des revendications précédentes, par lequel le porte-outil (20) est relié au mécanisme de percussion (30) et/ou à l'entraînement rotatif (40) en vue de la transmission du mouvement.
